Europäisches Patentamt

European Patent Office

Office européen des brevets

(11) Veröffentlichungsnummer: **0 281 830**
**A2**

# EUROPÄISCHE PATENTANMELDUNG

(21) Anmeldenummer: **88102571.2**

(22) Anmeldetag: **22.02.88**

(51) Int. Cl.⁴: **F23G 5/02** , C10B 53/00 , C04B 7/43

(30) Priorität: **13.03.87 DE 3708220**

(43) Veröffentlichungstag der Anmeldung:
**14.09.88 Patentblatt 88/37**

(84) Benannte Vertragsstaaten:
**BE DE ES FR GB IT**

(71) Anmelder: **Krupp Polysius AG**
**Graf-Galen-Strasse 17**
**D-4720 Beckum(DE)**

(72) Erfinder: **Neumann, Eberhard Wilhelm,**
**Ing.(grad.)**
**Wagenfeldstrasse 29**
**D-4722 Ennigerloh(DE)**

(74) Vertreter: **Tetzner, Volkmar, Dr.-Ing. Dr. jur.**
**Van-Gogh-Strasse 3**
**D-8000 München 71(DE)**

(54) **Verfahren und Anlage zur Ausnutzung der Heizenergie von Haus- und Gewerbemüll.**

(57) Die Erfindung betrifft ein Verfahren zur Ausnutzung der Heizenergie von Haus-und Gewerbemüll in einer Drehofenanlage. Der aufbereitete Rohmüll wird in einem Pyrolyse-Reaktor entgast, und das erzeugte Pyrolysegas wird gegebenenfalls unter Verwendung von Primärbrennstoff dem Hauptbrenner des Drehrohrofens zugeführt. Für eine optimale und wirtschaftliche Erzeugung des Pyrolysegases wird zerkleinerter Müll mit Hilfe von Kühlerabluft pneumatisch getrocknet und dem Pyrolyse-Reaktor aufgegeben. Der Pyrolyse-Reaktor wird mit heißer Sekundärluft aus dem Ofenauslaufkopf indirekt auf Niedertemperatur beheizt, wobei erzeugtes Pyrolysegas zusammen mit verbrauchter Sekundärluft dem Hauptbrenner des Brennofens zugeführt wird.

EP 0 281 830 A2

## Verfahren und Anlage zur Ausnutzung der Heizenergie von Haus-und Gewerbemüll

Die Erfindung betrifft ein Verfahren zur Ausnutzung der Heizenergie von Haus-und Gewerbemüll in einer einen Brennofen und einen dem Brennofen nachgeordneten Kühler enthaltenden, insbesondere zur Herstellung von mineralischen Baustoffen dienenden Brennofenanlage, gemäß dem Oberbegriff des Patentanspruches 1. Außerdem befaßt sich die Erfindung mit einer Anlage zur Durchführung dieses Verfahrens.

Man ist seit einiger Zeit bestrebt, Abfälle, insbesondere Haus-und Gewerbemüll zur Ausnutzung ihres Energiegehaltes Brennöfen zuzuführen.

So ist es beispielsweise bekannt, bei zur Herstellung von mineralischen Baustoffen, insbesondere Zementklinker dienenden Drehofenanlagen zerkleinerten und vorsortierten Haus-und/oder Gewerbemüll zusammen mit anderen Primärbrennstoffen, z. B. Kohlenstaub, Öl, Erdgas, der Hauptfeuerung des Drehrohrofens zuzuführen. Nachteilig bei diesem Verfahren ist, daß in Folge des schwankenden Müllheizwerts das Energieangebot durch ständiges Nachregeln des Hauptbrenners konstantgehalten werden muß.

Es wurde weiterhin versucht, Müll in Form von sog. Eco-Briketts im Hauptfeuerungsbereich des Drehrohr ofens zu verbrennen. Aufgrund der Dichte und Größe dieser Eco-Briketts ist der Ausbrand so unbefriedigend, daß eine Aufmahlung der Briketts erforderlich ist.

Als Nachteil dieser bisher erläuterten bekannten Verfahren ist noch zu nennen, daß bei der Direktverbrennung von Müll alle in diesem Müll enthaltenen Schadstoffe mit in das gesamte Ofensystem eingebracht werden. Dies ist besonders im Falle von enthaltenen Schwermetallen unerwünscht, da diese Schwermetalle Temperaturen ausgesetzt werden, bei denen sie verdampfen. Sie werden zwar zum großen Teil in das Brennprodukt eingebunden, der nichteingebundene Anteil reichert sich jedoch in Gaskreisläufen an und muß von Zeit zu Zeit aus dem Ofensystem abgeführt werden.

Ein weiterer Nachteil der Direktverbrennung besteht in dem Eintrag von Chlor, das oberhalb bestimmter Konzentrationen zu einem Ofenstillstand führt. In Abhängigkeit von der bereits vorhandenen Chlorbelastung des Ofensystems wird hierdurch die maximal mögliche Einsatzmenge des Abfalles begrenzt.

Es ist weiterhin bekannt, vorsortierten und/oder zerkleinerten Rohmüll unter Luftabschluß zu entgasen (pyrolysieren) und das dabei entstehende brennbare Gas der Zweitfeuerung eines Zementdrehrohrofens zuzuführen. Bei diesem Verfahren werden die Schwermetalle mit Ausnahme von Quecksilber nicht mehr in das Ofensystem eingebracht, sondern sie verbleiben im sog. Pyrolyse-Reststoff, der gefahrlos deponiert oder auch mit dem erbrannten Zementklinker vermahlen werden kann.

Auch dieses zuvorgenannte Verfahren ist mit einigen gravierenden Nachteilen behaftet: Aufgrund des im Müll enthaltenen hohen Wasseranteils wird der Brennwert des erzeugten Pyrolysegases herabgesetzt; die daraus resultierende niedrige Verbrennungstemperatur in Verbindung mit höheren Abgasmengen begrenzt die Zufeuerungsrate des Pyrolysegases. Außerdem werden die im Pyrolysegas enthaltenen organischen Schadstoffe, z. B. chlorierte Kohlenwasserstoffe, in der Zweitfeuerung Temperaturen ausgesetzt, die die völlige Zerstörung dieser Schadstoffe nicht gewährleisten. Insbesondere besteht die Gefahr der Bildung von hochgiftigen Dibenzodioxinen und -furanen.

In etwa ähnlicher Weise wird auch bei der Ausführung gemäß DE-A-27 48 510 vorgegangen. Hierbei können Abfallstoffe allgemeiner Art ohne weitere Vorbehandlung oder Aufbereitung in ihrer ursprünglichen Zusammensetzung in einem Pyrolyse-Reaktor entgast werden, bei dem es sich um einen Schachtofen, Drehrohrofen, Wirbelschichtofen, Etagenofen, Röstofen oder ein Sinterband handeln kann. Das so erzeugte Pyrolysegas kann dann einem gesonderten Brenner und/oder einem Hauptbrenner des Drehrohrofens zugeführt werden (im Bedarfsfalle zusammen mit einem erforderlichen Anteil eines Primärbrennstoffes), unterliegt jedoch aufgrund der Heterogenität der Ausgangsstoffe, insbesondere bei der Verwendung von Haus-und Gewerbemüll, erheblichen Schwankungen hinsichtlich seiner brenntechnischen Eigenschaften.

Der Erfindung liegt nun die Aufgabe zugrunde, unter Vermeidung der aufgezeigten Nachteile der bekannten Ausführungen ein Verfahren der im Oberbegriff des Anspruches 1 vorausgesetzten Art so weiterzuverbessern, daß der Rohmüll kostensparend aufbereitet und vergleichmäßigt dem Pyrolyse-Reaktor zugeführt und in diesem auf optimale Weise entgast wird und daß die im erzeugten Pyrolysegas noch enthaltenen organischen Schadstoffe im Hauptbrenner des Brennofens vollkommen umgesetzt werden.

Diese Aufgabe wird erfindungsgemäß durch die im Kennzeichen des Anspruches 1 angegebenen Verfahrensschritte gelöst.

Eine Anlage zur Durchführung dieses erfindungsgemäßen Verfahrens enthält Merkmale nach dem Oberbegriff des Anspruches 9 und zeichnet sich durch die im Kennzeichen dieses Anspruches 9 angegebenen weiteren Merkmale aus.

Weitere vorteilhafte Ausgestaltungen und Weiterbildungen der Erfindung sind Gegenstand der übrigen Unteransprüche.

Bei diesen erfindungsgemäßen Verfahren wird zumindest eine in der Fachwelt als sogenannter "Fluff" bezeichnete Leichtfraktion zu einem pyrolysierbaren Wertstoff aufbereitet, indem zumindest dieser zerkleinerte Fluff vor oder während seiner Zuführung zum Pyrolyse-Reaktor pneumatisch mit Hilfe eines Heißgasstromes getrocknet wird, durch den dieser Fluff zur Gewinnung des Wertstoffes auf einen Trockensubstanzgehalt von wenigstens etwa 78 %, vorzugsweise etwa 88 - 92 %, gebracht und der von dem Kühler der Brennofenanlage insbesondere als Kühlerabluft abgezweigt wird. Der dem Pyrolyse-Reaktor aufzugebende Wertstoff kann somit in äußerst vorteilhafter Weise in seiner stofflichen Zusammensetzung, in seiner Korngrößenzusammensetzung und vor allem auch in seinem Feuchtigkeits-bzw. Wassergehalt in vertretbaren Grenzen und somit mit verhältnismäßig niedrigen Kosten vergleichmäßigt dem Reaktor zugeführt werden. Dieses Zuführen kann dabei zumindest teilweise durch den während des Trocknens gleichzeitig erfolgenden pneumatischen Transport des Wertstoffes besonders kostensparend erfolgen. Eventuell kann der so aufbereitete Wertstoff auch in einen dem Pyrolyse-Reaktor vorgeschalteten Zwischenbunker gefördert werden, aus dem dieser Wertstoff dann dosiert der Eintrittsseite des Pyrolyse-Reaktors aufgegeben werden kann.

Der so gewonnene Wertstoff wird im Pyrolyse-Reaktor dann in einem Niedertemperaturprozeß entgast, indem dieser Pyrolyse-Reaktor indirekt beheizt wird. Diese indirekte Beheizung erfolgt in vorteilhafter Weise mit Hilfe von aus dem Übergangsbereich von Brennofen zu Kühler entnommener heißer Sekundärluft.

Können heiße Sekundärluft und/oder Kühlerabluft vom Ofensystem nicht zur Verfügung gestellt werden, so wird die zur Trocknung und Reaktorbeheizung erforderliche Wärmeenergie mittels herkömmlicher Brennkammerfeuerungen erzeugt.

Bei der indirekten Beheizung des Pyrolyse-Reak tors ist darauf zu achten, daß die Entgasung des aufgegebenen Wertstoffes im Pyrolyse-Reaktor weitgehend, vorzugsweise vollkommen unter Luftabschluß erfolgt, damit Verbrennungsvorgänge vermieden werden, um die Entgasungstemperatur nicht über den Verdampfungspunkt vor allem von Schwermetallen bzw. deren Verbindungen (mit Ausnahme von Quecksilber) ansteigen zu lassen.

Das auf diese Weise erzeugte Pyrolysegas, ein meist erforderlich werdender Anteil an Primärbrennstoff (z. B. Kohlenstoff, Öl oder Erdgas) sowie die zur indirekten Beheizung des Pyrolyse-Reaktors ausgenutzte Sekundärluft werden dem Hauptbrenner des Brennofens zur gemeinsamen Verbrennung zugeleitet. Durch die Verwendung der im Pyrolyse-Reaktor ausgenutzten Sekundärluft ist es - im Gegensatz zu bekannten Ausführungen - nicht mehr erforderlich, einen entsprechenden Anteil kalter Umgebungsluft als Primärluft dem Hauptbrenner zuzuführen, d. h. bei dem erfindungsgemäßen Verfahren wird somit verbrauchtes Beheizungsgas des Pyrolyse-Reaktors als vorgewärmte Verbrennungsluft (Primärluft) dem Hauptbrenner zugeführt (anstelle von kalter Luft).

Zur Erzeugung des Pyrolysegases im Niedertemperaturbereich wird im Pyrolyse-Reaktor vorteilhaft eine Entgasungstemperatur von etwa 500° bis 600°C, vorzugsweise im Bereich von etwa 550°C, und ein statischer Absolutdruck zwischen 75 und 110 kPa aufrechterhalten. Die Verbrennung des so erzeugten Pyrolysegases im Hauptbrenner des Brennofens erfolgt erfindungsgemäß vorteilhaft bei Temperaturen, die deutlich oberhalb 1200°C liegen, so daß eine zuverlässige Umsetzung bzw. Zerstörung von im Pyroylsegas eventuell vorhandenen organischen Schadstoffen gewährleistet ist. Diese Verbrennung des erzeugten Pyrolysegases im Hauptbrenner erfolgt besonders vorteilhaft bei einer Brennguttemperatur von etwa 1450°C und einer Flammtemperatur von etwa 2000°C.

Eine Temperaturregelung für die Entgasungstemperatur im Pyrolyse-Reaktor kann mit an sich bekannten Regeleinrichtungen und -verfahren vor allem über die mit der heißen Sekundärluft zugeführte Wärmemenge erfolgen. Da der Pyrolyse-Reaktor indirekt mit der heißen Sekundärluft aufgeheizt wird, kann letztere nicht mit den Abfallstoffen des zu entgasenden Wertstoffes in Berührung kommen, so daß auch dadurch eventuelle Teilverbrennungsvorgänge im Pyrolyse-Reaktor vermieden werden.

Die Erfindung sei im folgenden anhand der Zeichnung näher beschrieben. In dieser Zeichnung zeigen

Fig. 1 ein vereinfachtes Gesamtschema einer Anlage zur Durchführung des erfindungsgemäßen Verfahrens;

Fig. 2 eine etwas ausführlichere Teil-Schemadarstellung insbesondere für eine andere Ausführungsvariante der Aufbereitungseinrichung.

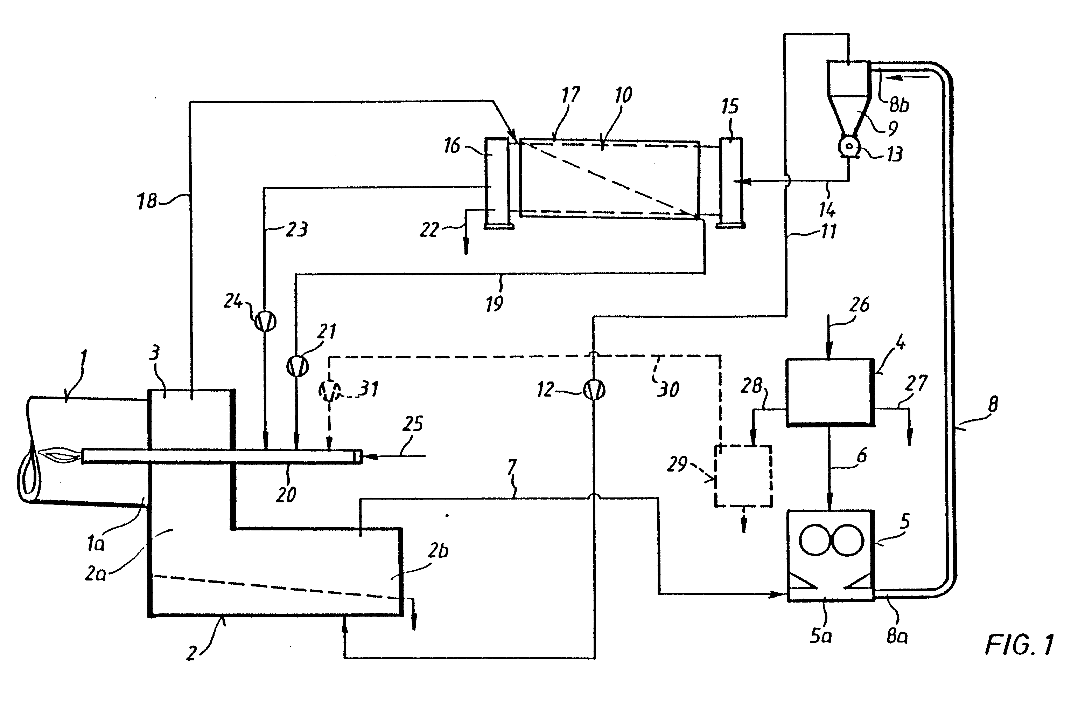

Anhand des Gesamtschemas der Fig. 1 sei zunächst eine erste Ausführungsart der erfindungsgemäßen Anlage erläutert. Diese Anlage enthält eine weitgehend in üblicher Weise ausgeführte Brennofenanlage, zu der ein Brennofen, der vorzugsweise in Form eines herkömmlichen Drehrohrofens 1 ausgeführt ist, und ein diesem Drehrohrofen 1 nachgeordneter Kühler 2 gehört, bei dem es sich ebenfalls um eine im wesentlichen herkömmliche Ausführung (z. B. Schubrostkühler, Wanderrostkühler oder dergleichen) handeln kann. Das Gutauslaufende 1a des Drehrohrofens 1 und das Einlaufende 2a des Kühlers 2 sind in an sich bekannter Weise durch einen Ofenauslaufkopf 3 miteinander verbunden.

Es sei angenommen, daß diese Brennofenanlage zur Herstellung von mineralischen Baustoffen, insbesondere zur Herstellung von Zementklinker dient.

Die erfindungsgemäße Anlage zur Ausnutzung der Heizenergie von Haus-und Gewerbemüll enthält gemäß Fig. 1 ferner eine Rohmüll-Aufbereitungseinrichtung mit einer Sortiervorrichtung 4 und einer dieser Sortiervor richtung 4 gutseitig nachgeordneten Zerkleinerungsvorrichtung 5; Sortiervorrichtung 4 und Zerkleinerungsvorrichtung 5 sind durch eine Fluffleitung 6 miteinander verbunden. Sowohl die Sortiervorrichtung 4 als auch die Zerkleinerungsvorrichtung 5 können in angepaßter, zweckmäßiger Weise ein-oder mehrstufig ausgeführt sein.

An das untere Ende 5a bzw. an die letzte Stufe der Zerkleinerungsvorrichtung 5 ist eine vom hinteren Ende (Gutauslaufende) 2b des Kühlers 2 kommende Warmluft-bzw. Trocknungsgas-Zuführleitung 7 herangeführt. Diese Trocknungsgas-Zuführleitung 7 mündet dabei derart in das untere Ende 5a der Zerkleinerungsvorrichtung 5 ein, daß sie mit dem Zuführende 8a einer Leitungsstrecke 8 strömungsmäßig in Verbindung steht. Das entgegengesetzte Abgabeende 8b dieser Leitungsstrecke 8 mündet in einen Zyklonabscheider 9 ein. Die Leitungsstrecke 8 und der Zyklonabscheider 9 sind wesentliche Bestandteile eines pneumatischen Stromtrockners, dem der in der Zerkleinerungsvorrichtung 5 zerkleinerte Fluff am Zuführende 8a der Leitungsstrekke 8 aufgegeben wird. In dieser Leitungsstrecke 8 wird der zerkleinerte Fluff pneumatisch dem Zyklonabscheider 9 zugeführt, der vorzugsweise in der Nähe eines nachgeordneten Pyrolyse-Reaktors 10 installiert wird. Die Leitungsstrecke 8 und der Zyklonabscheider 9 sind so ausgeführt und dimensioniert, daß sie außer eine zuverlässige pneumatische Förderung des zerkleinerten Fluffs auch eine in gewünschter Weise ausreichende Trocknung dieses zerkleinerten Fluffs gewährleisten können.

Nach der Abscheidung des Fluffs aus dem der Trocknung und dem pneumatischen Transport dienenden Heißgasstrom wird letzterer über eine von diesem Zyklonabscheider ausgehende Reingasleitung 11 mit vorzugsweise darin angeordnetem Gebläse 12 wieder einer geeigneten Stelle des Kühlers 2 als Kühlluft zugeführt.

Den unteren Abschluß des Zyklonabscheiders 9 bildet z. B. eine Zellenradschleuse 13, die über eine Leitung 14 - und eventuell über einen hier nicht dargestellten Zwischenbunker - mit einer Aufgabeeinrichtung 15 am Eintrittsende des Pyrolyse-Reaktors 10 in Verbindung steht. Es kann dabei besonders zweckmäßig sein, den Zyklonabscheider 9 so anzuordnen, daß der getrocknete Fluff ( = Wertstoff) in der Leitung 14 durch Eigengewicht über die Aufgabeeinrichtung 15 direkt in den Pyrolyse-Reaktor 10 (bzw. einen vorgeschalteten Wertstoff-Zwischenbunker) gelangt.

Als Pyrolyse-Reaktor kann jeder geeignete, indirekt beheizbar Pyrolyse-Reaktor, z. B. ein Wirbelschichtreaktor, Verwendung finden. Besonders vorgezogen wird ein Drehtrommelreaktor 10, der in an sich bekannter Weise ausgeführt sein kann und durch seine Aufgabeeinrichtung 15 an seinem Eintrittsende und durch eine Austragseinrichtung 16 an seinem Austrittsende weitgehend oder vollkommen un ter Außenluftabschluß arbeiten kann. Dieser Drehtrommelreaktor 10 wird indirekt derart beheizt, daß der zugeführte getrocknete Wertstoff bei Niedrigtemperatur von . etwa 500°C bis 600°C, vorzugsweise im Bereich von etwa 550°C und bei einem statischen Absolutdruck von etwa 75 - 110 kPa entgast bzw. pyrolisiert werden kann.

In dem in Fig. 1 veranschaulichten Anlagenschema ist der Drehtrommelreaktor 10 nur beispielsweise mit einer indirekten Beheizungseinrichtung 17 in Form eines Doppelmantels veranschaulicht. Selbstverständlich kann auch jede andere geeignete Ausführung einer indirekten Beheizung, z. B. auch ein den Drehtrommelreaktor 10 durchsetzendes Röhrensystem, vorgesehen sein. Wichtig ist jedoch, daß die Beheizungseinrichtung 17 des Drehtrommelreaktors 10 über eine Sekundärgasleitung 18 mit dem Ofenauslaufkopf 3 des Drehrohrofens 1 und/oder mit einer konventionellen Heißgaserzeugungseinrichtung in Verbindung steht. Über eine zweite Gasleitung 19 steht diese Beheizungseinrichtung 17 derart mit einem in üblicher Weise dem Drehrohrofen 1 zugeordneten Hauptbrenner 20 in Verbindung, daß die zum indirekten Beheizen des Reaktors 10 ausgenutzte, verbrauchte Sekundärluft als warme Primärluft diesem Hauptbrenner 20 zugeleitet werden kann. In dieser zweiten Gasleitung 19 ist ein geeignetes Gebläse 21 eingeschaltet.

Der von seinem Eintrittsende zu seinem Austrittsende geneigt verlaufende Drehtrommelreaktor 10 weist an seiner Austragseinrichtung 16 eine Abführleitung 22 für Pyrolyse-Reststoffe sowie eine Pyrolyse-Gasleitung 23 auf, die ebenfalls an den Hauptbrenner 20 herangeführt ist und ein gesondertes Gebläse 24 enthält.

An den Hauptbrenner 20 ist ferner eine nur kurz angedeutete Brennstoff-Zuführleitung 25 angeschlossen, über die eventuell erforderlich werdender Primärbrennstoff, z. B. Öl, Kohlenstaub, Erdgas oder dergleichen, dem Hauptbrenner 20 zugeführt werden kann. In den meisten Ausführungsfällen

wird es jedoch erforderlich sein, ständig einen geregelten Anteil dieses Primärbrennstoffes dem Hauptbrenner 20 zuzuführen.

Da in der Pyrolysegasleitung 23, in der zweiten Gasleitung 19 sowie auch in der Reingasleitung 11 je ein gesondertes Gebläse 24 bzw. 21 bzw. 12 angeordnet ist, können die in diesen Leitungen strömenden Gasmengen in der jeweils erforderlichen Weise äußerst günstig geregelt werden.

Die anhand des Schemas in Fig. 1 erläuterte Anlage zur Durchführung des weiter oben geschilderten Verfahrens kann verhältnismäß einfach aufgebaut und betrieben werden.

Dieses erfindungsgemäße Verfahren kann jedoch in vorteilhafter Weise noch weiter ausgestaltet werden, indem zunächst einmal die Sortiervorrichtung 4 so gestaltet ist, daß sie den bei 26 aufgegebenen Rohmüll in drei Hauptfraktionen sortiert, und zwar in eine dem Pyrolyse-Reaktor 10 zuzuführende erste Fraktion, nämlich die durch den sogenannten Fluff gebildete Leichtfraktion, die über die Fluffleitung 6 der Zerkleinerungsvorrichtung 5 zugeführt wird, ferner eine zweite Fraktion, die im wesentlichen nicht-brennbare Bestandteile, wie z. B. Sand, Asche, Metall (im wesentlichen ohne Schwermetalle wie Quecksilber) Glas, Steine und dergleichen enthält und über einen Auslauf 27 abgeführt wird, sowie eine vegetabile Naßfraktion, die über einen gesonderten Auslauf 28 abgeführt wird.

Diese aus dem Auslauf 28 abgeführte vegetabile Naßfraktion (nachfolgend "Vegetabilien" genannt) kann in vorteilhafter Weise gemäß einem vereinfachten ersten Beispiel noch einer gesonderten Weiteraufbereitung unterworfen werden, indem sie - wie gestrichelt in Fig. 1 angedeutet - in einen gesonderten Biogasreaktor 29 aufgegeben wird, um dort heizwertreiches Biogas zu erzeugen. Dieses Biogas kann grundsätzlich in jeder geeigneten Weise an zweckmäßiger Stelle verfeuert werden. Besonders vorteilhaft und wirtschaftlich ist es jedoch, wenn das so erzeugte Biogas vollkommen oder zumindest teilweise ebenfalls dem Hauptbrenner 20 des Drehrohrofens 1 zugeführt wird. Zu diesem Zweck ist in der Schemadarstellung gemäß Fig. 1 eine Biogasleitung 30 gestrichelt angedeutet, die den Biogasreaktor 29 ebenfalls mit dem Hauptbrenner 20 verbindet und in der zweckmäßig ebenfalls ein gesondertes Gebläse 31 zur regelbaren Zuführung des Biogases zum Hauptbrenner 20 angeordnet ist.

Grundsätzlich ist es auch möglich, diese Vegetabilien mit der den Hauptanteil der pyrolysierbaren Leichtfraktion, also dem Fluff, abführenden Fluffleitung 6 der Zerkleinerungsvorrichtung 5, der Trocknung und dann der Pyrolyse zuzuführen. Die zuvor erläuterte gesonderte Weiteraufbereitung der Vegetabilien bietet jedoch beträchtliche verfahrenstechnische Vorteile.

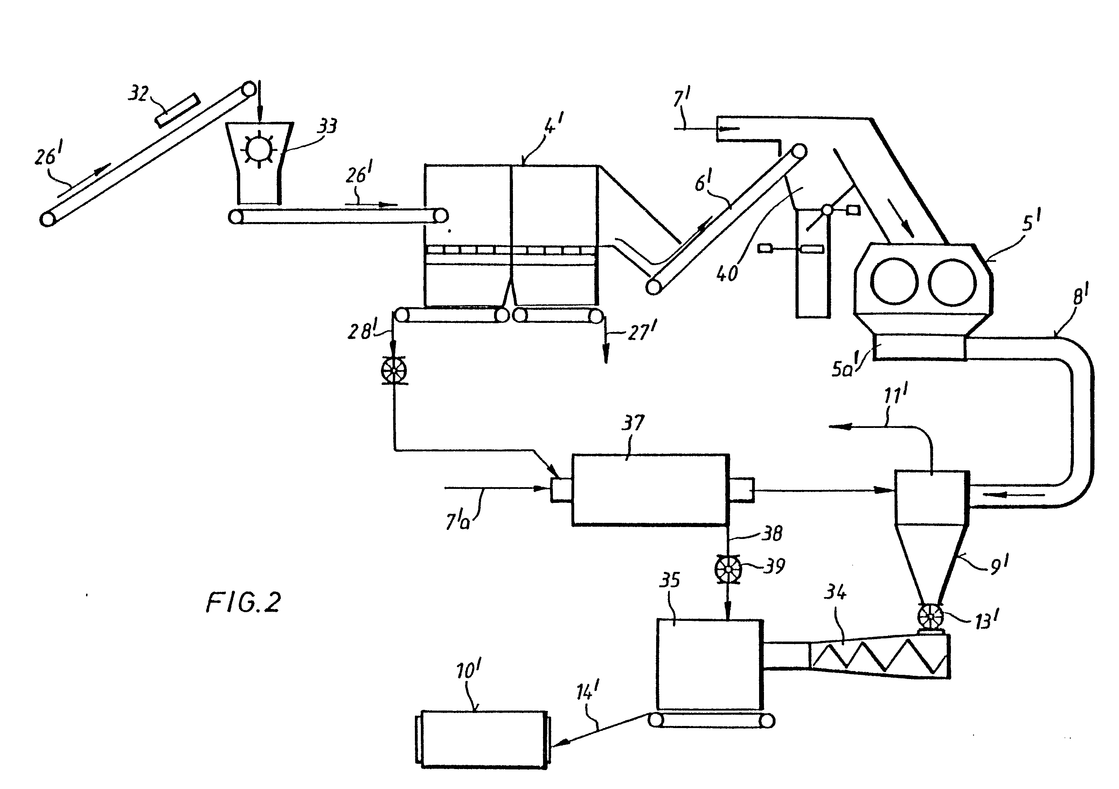

Anhand der Teil-Schemadarstellung in Fig. 2 sei eine weitere Ausführungsvariante beschrieben, die insbesondere die Aufbereitung und Trocknung zur Gewinnung des Wertstoffes im Bereich vor dem Pyrolyse-Reaktor betrifft. In dieser gegenüber Fig. 1 etwas ausführlicheren Teil-Schemadarstellung werden im Vergleich zu Fig. 1 etwa gleichartige Anlagenteile mit denselben Bezugszeichen unter Beifügung eines Striches versehen, so daß sie nicht nochmals im einzelnen erläutert werden müssen.

Auch bei dieser Ausführungsvariante werden die aussortierten Vegetabilien einer gesonderten Weiteraufbereitung unterworfen. Dies geschieht in diesem Falle jedoch durch ein zusätzliches Trocknen, und zwar in der Weise, daß diese Vegetabilien in einer gesonderten Trocknungseinrichtung (wie nachfolgend noch näher erläutert wird) ebenfalls auf einen Trockensubstanzgehalt von wenigstens etwa 78 %, vorzugsweise etwa 88 - 92 % getrocknet und dann im Bereich vor dem Pyrolyse-Reaktor 10' mit dem getrockneten Fluff zusammengeführt werden, wobei diese getrockneten Vegetabilien und der getrocknete Fluff dann gemeinsam den der Pyrolyse zuzuführenden, aufbereiteten Wertstoff bilden.

Betrachtet man die Teil-Schemadarstellung in Fig.2, dann wird hier der Rohmüll (Pfeil 26') an einem Magnetabscheider 32 vorbei zunächst einer Vorzerkleinerungsvorrichtung 33 zugeführt, von der der vorzerkleinerte Rohmüll (Pfeil 26') der Sortiervorrichtung 4' der Aufbereitungseinrichtung zugeführt wird. In dieser Sortiervorrichtung 4' wird der vorzerkleinerte Rohmüll in eine pyrolysierbare Leichtfraktion, nämlich den Fluff, in eine vegetabile Naßfraktion (Vegetabilien) und eine nichtpyrolysierbare Feinmüllfraktion sortiert.

Über eine Fluffleitung bzw. einen Fluffförderer 6' wird der pyrolysierbare Fluff in gleichartiger Weise wie im Beispiel der Fig. 1 zunächst der (Nach-) Zerkleinerungsvorrichtung 5' zugeführt, von deren unterem Ende 5a' er in die Leitungsstrecke 8' und von dort in den Zyklonabscheider 9' des pneumatischen Stromtrockners gelangt. Der im Zyklonabscheider 9' abgeschiedene, getrocknete Fluff stellt jetzt den zu pyrolysierenden Wertstoff dar und wird in diesem Falle über einen Förderer 34, beispielsweisen einen Schneckenförderer, einem Zwischenbunker 35 aufgegeben, der dem Pyrolyse-Reaktor 10' vorgeschaltet ist.

Während die nicht-pyrolysierbare Feinmüllfraktion über den Auslauf 27' der Sortiervorrichtung 4' in geeigneter Weise abgeleitet wird, werden die Vegetabilien (vegetabile Naßfraktion) über den Auslauf 28' sowie eventuell über eine Zellenradschleuse 36 einer geeigneten Trocknungseinrichtung zugeführt, die im dargestellten Falle eine Trocknungstrommel 37 sein kann. Die in dieser Trocknungstrommel 37 auf den gewünschten Trockensubstanzgehalt herabgetrockneten Vegetabilien werden über eine Leitung 38 und gegebenenfalls eine Schleuse 39 ebenfalls dem Zwischenbunker 35 zugeführt, so daß in diesem Falle diese getrockneten Vegetabilien zusammen mit dem getrockneten Fluff den dem Pyrolyse-Reaktor 10' zuzuführenden Wertstoff bilden. Aus diesem Zwischenbunker 35 wird der so gewonnene Wertstoff über die Leitung 14' in gleicher Weise wie im vorhergehenden Beispiel (Fig. 1),vorzugsweise dosiert dem Pyrolyse-Reaktor 10' zugeleitet.

Die pneumatische Trocknung des zerkleinerten Fluffs nach der Zerkleinerungseinrichtung 5' erfolgt auch in diesem Falle (Fig. 2) wiederum mit Hilfe eines vom Kühler abgezweigten Heizgasstromes, der über die Trocknungsgas-Zuführleitung 7' an die Zerkleinerungsvorrichtung 5' herangeführt wird. Aber auch für die Trocknung der Vegetabilien in der Trocknungstrommel 37 kann ein Teilstrom des vom Kühler abgezweigten Heizgasstromes ausgenutzt werden, wie es in Fig. 2 durch die Leitung 7'a angedeutet ist. Die aus der Trocknungstrommel 37 abgeleiteten Brüden können ebenfalls in den Zyklonabscheider 9' des pneumatischen Stromtrockners eingeleitet werden, von wo aus sie gemeinsam mit den gereinigten Trocknungsabgasen über die Reingasleitung 11' zum Kühler zurückgeleitet werden.

In der Darstellung gemäß Fig. 2 kann die Zerkleinerungsvorrichtung 5' noch mit einem zusätzlichen Abteil 40 zum Ableiten von Schwerteilen aus dem Aussortierten Fluff ausgerüstet sein.

## Ansprüche

1. Verfahren zur Ausnutzung der Heizenergie von Haus-und Gewerbemüll in einer einen Brennofen und einen dem Brennofen nachgeordneten Kühler enthaltenden, insbesondere zur Herstellung von mineralischen Baustoffen dienenden Brennofenanlage, bei dem

   a) aus dem Rohmüll zumindest eine Leichtfraktion als sogenannter Fluff aussortiert, zerkleinert und als aufbereiteter Wertstoff einem Pyrolyse-Reaktor aufgegeben wird, in dem dieser Wertstoff unter Luftabschluß und Wärmezufuhr entgast wird, wobei Pyrolysegas und Pyrolyse-Reststoffe anfallen,

   b) das Pyrolysegas dem Hauptbrenner des Brennofens, gegebenenfalls unter zusätzlicher Verwendung von Primärbrennstoff, zugeführt wird,

gekennzeichnet durch folgende Merkmale:

   c) zumindest der zerkleinerte Fluff wird in einem vorzugsweise aus dem Kühler der Brennofenanlage abgezweigten Heißgasstrom pneumatisch auf einen Trockensubstanzgehalt von wenigstens etwa 78 %, vorzugsweise etwa 88 - 92 %, zur Gewinnung des Wertstoffes getrocknet;

   d) der so gewonnene Wertstoff wird dem Pyrolyse-Reaktor aufgegeben und bei Niedertemperatur entgast, wobei der Pyrolyse-Reaktor mit aus dem Übergangsbereich von Brennofen zu Kühler entnommener heißer Sekundärluft und/oder mit Verbrennungsgasen aus einer Hilfsfeuerung oder aus dem Brennofen indirekt beheizt wird.

   e) das im Pyrolyse-Reaktor erzeugte Pyrolysegas, ein eventuell erforderlicher Anteil Primärbrennstoff sowie die zur indirekten Beheizung des Pyrolyse-Reaktors ausgenutzte Sekundärluft werden dem Hauptbrenner des Brennofens zugeleitet.

2. Verfahren nach Anspruch 1, dadurch gekennzeichnet, daß aus dem zu zerkleinernden Rohmüll zuvor im wesentlichen nicht-brennbare Bestandteile wie Sand, Asche, Metall, Glas, Steine und ähnliches einerseits und vegetabile Naßanteile andererseits aussortiert werden, wobei letztere einer gesonderten Weiteraufbereitung unterworfen werden.

3. Verfahren nach Anspruch 2, dadurch gekennzeichnet, daß die vegetabilen Naßanteile aus dem Rohmüll einem Biogasreaktor zur Erzeugung von heizwertreichem Biogas aufgegeben werden, das zumindest teilweise ebenfalls dem Hauptbrenner des Brennofens zuführbar ist.

4. Verfahren nach Anspruch 2, dadurch gekennzeich net, daß die vegetabilen Naßanteile in einer gesonderten Trocknungseinrichtung ebenfalls auf einen Trockensubstanzgehalt von wenigstens etwa 78 %, vorzugsweise etwa 88 - 92 % getrocknet und dann im Bereich vor dem Pyrolyse-Reaktor mit dem getrockneten Fluff zusammengeführt werden, wobei diese getrockneten Vegetabilien und der getrocknete Fluff gemeinsam den der Pyrolyse zuzuführenden, aufbereiteten Wertstoff bilden.

5. Verfahren nach Anspruch 4, dadurch gekennzeichnet, daß für die Trocknung der vegetabilen Naßanteile ein Teilstrom des vom Kühler abgezweigten Heißgasstromes ausgenutzt wird, wobei die aus der Trocknungseinrichtung abgeleiteten Brüden zum Kühler zurückgeführt werden.

6. Verfahren nach Anspruch 1, dadurch gekennzeichnet, daß der zur Trocknung des zerkleinerten Fluffs benutzte Heißgasstrom aus dem hinteren Bereich des Kühlers abgezogen und der abgekühlte Gasstrom nach Trocknung und Abscheidung des Fluffs erneut dem Kühler als Kühlgas zugeführt wird.

7. Verfahren nach Anspruch 1, dadurch gekennzeichnet, daß im Pyrolyse-Reaktor eine Entgasungstemperatur von etwa 500 - 600°C, vorzugsweise im Bereich von etwa 550°C und ein statischer Absolutdruck zwischen etwa 75 und 110 kPa aufrecht erhalten wird und daß die Verbrennung des erzeugten Pyrolysegases im Hauptbrenner des Brennofens bei einer Temperatur deutlich oberhalb 1200°C erfolgt.

8. Verfahren nach Anspruch 7, dadurch gekennzeichnet, daß die Verbrennung des erzeugten Pyrolysegases im Hauptbrenner bei einer Brennguttemperatur von etwa 1450°C und einer Flammtemperatur von etwa 2000°C erfolgt.

9. Anlage zur Durchführung des Verfahrens nach Anspruch 1, enthaltend

a) einen einen Hauptbrenner aufweisenden Brennofen (1) und einen diesem Brennofen nachgeordneten Kühler (2),

b) eine Aufbereitungseinrichtung mit Vorrichtungen (4, 5) zum Sortieren und Zerkleinern von Rohmüll,

c) einen mit der Aufbereitungseinrichtung (4, 5) in Verbindung stehenden Pyrolyse-Reaktor (10) mit einer Aufgabeeinrichtung (15) an seiner Eintrittsseite, einer Beheizungseinrichtung (17) sowie einer Austragseinrichtung (16) für Pyrolyse-Reststoffe und Pyrolysegas an seiner Austrittsseite,

d) eine Pyrolyse-Gasleitung (23), die die Austrittsseite des Pyrolyse-Reaktors (10) mit dem Hauptbrenner (20) des Brennofens (1) verbindet,

e) einen Ofenauslaufkopf (3), der das Gutauslaufende des Brennofens (1) mit dem Kühler (2) verbindet,

dadurch gekennzeichnet,

f) daß im Bereich zwischen der Aufbereitungseinrichtung (4, 5) und dem Pyrolyse-Reaktor (10) ein pneumatischer Stromtrockner mit einer Leitungsstrecke (8) und einem Zyklonabscheider (9) angeordnet ist, wobei dieser Stromtrockner einerseits über eine Trocknungsgas-Zuführleitung (7) und andererseits über eine vom Zyklonabscheider (9) ausgehende Reingasleitung (11) mit dem Kühler (2) verbunden ist;

g) daß der Pyrolyse-Reaktor (10) ein mit heißer Sekundärluft aus dem Ofenauslaufkopf (3) indirekt beheizter Reaktor ist, der zumindest unter weitgehendem Luftabschluß betreibbar und von dem neben der Pyrolyse-Gasleitung (23) noch eine zweite Gasleitung (19) für verbrauchte Sekundärluft an den Hauptbrenner (20) des Brennofens (1) herangeführt ist.

10. Anlage nach Anspruch 9, dadurch gekennzeichnet, daß die Leitungsstrecke (8) des Stromtrockners im Bereich der Zerkleinerungsvorrichtung (5, 5a) von der Aufbereitungseinrichtung (4, 5) ausgeht, in diesem Bereich mit der vom Kühler (2) kommenden Trocknungsgas-Zuführleitung (7) in Verbindung steht und mit ihrem entgegengesetzten Ende (8a) in den Zyklonabscheider(9) einmündet.

11. Anlage nach Anspruch 9, dadurch gekennzeichnet, daß in den vom Pyrolyse-Reaktor (10) zum Hauptbrenner (20) des Brennofens (1) führenden Pyrolysegas-und Sekundärgas-Leitungen (23, 19) sowie in der den Zyklonabscheider (9) mit dem Kühler (2) verbindenden Reingasleitung (11) je ein gesondertes Gebläse (24, 21, 12) angeordnet ist.

12. Anlage nach Anspruch 9, dadurch gekennzeichnet, daß als Pyrolyse-Reaktor ein nach seiner Austrittsseite hin geneigter, indirekt beheizter Drehtrommelreaktor (10) vorgesehen ist, dessen Eintritts-und Austrittsseiten im wesentlichen luftdicht ausgebildet sind.

13. Anlage nach Anspruch 9, dadurch gekennzeichnet, daß als Brennofen ein Drehrohrofen (1) vorgesehen ist.

14. Anlage nach Anspruch 9, dadurch gekennzeichnet, daß die Sortiervorrichtung (4, 4') der Aufbereitungseinrichtung zumindest für eine Sortierung des Rohmülls in eine pyrolysierbare Leichtfraktion (Fluff), in eine vegetabile Naßfraktion und in eine nicht-pyrolysierbare Feinmüllfraktion ausgebildet ist.

15. Anlage nach Anspruch 14, dadurch gekennzeichnet, daß der Sortiervorrichtung (4') eine gesonderte Trocknungseinrichtung (37) für die vegetabile Naßfraktion nachgeordnet ist, wobei diese Trocknungseinrichtung mit dem Pyrolyse-Reaktor (10') in Verbindung steht.

16. Anlage nach Anspruch 9 und/oder 15, dadurchg gekennzeichnet, daß dem Pyrolyse-Reaktor (10, 10') ein Zwischenbunker (35) zur Aufnahme und Weiterleitung des aufbereiteten Wertstoffes zu diesem Reaktor vorgeschaltet ist.

FIG. 1

FIG.2